# EUROPÄISCHE PATENTSCHRIFT

(11) **EP 3 948 447 B1**
(45) Veröffentlichungstag und Bekanntmachung des Hinweises auf die Patenterteilung: **28.02.2024**
(21) Anmeldenummer: 20718194.2
(22) Anmeldetag: 26.03.2020
(51) Int. Cl.: G05B 19/042, B30B 7/04, H04L 67/12, B21D 39/04, H04W 88/06

(54) **VERFAHREN ZUR HERSTELLUNG EINER MEHRZAHL VON VERBUNDSTRUKTUREN**
METHOD FOR PRODUCING A PLURALITY OF COMPOSITE STRUCTURES
PROCÉDÉ DE FABRICATION D'UNE PLURALITÉ DE STRUCTURES COMPOSITES

(30) Priorität: 29.03.2019 DE 102019108242
(43) Veröffentlichungstag der Anmeldung: 09.02.2022
(73) Patentinhaber: Uniflex-Hydraulik GmbH, 61184 Karben (DE)
(72) Erfinder: BAUMGARTNER, Carsten, 35321 Laubach (DE); POTH, Hubert, 61169 Friedberg (DE)
(74) Vertreter: Grättinger Möhring von Poschinger Patentanwälte Partnerschaft mbB
(86) Internationale Anmeldenummer: PCT/EP2020/058605
(87) Internationale Veröffentlichungsnummer: WO 2020/201029

(56) Entgegenhaltungen:
- EP-A1- 2 927 854
- EP-A1- 3 012 695
- WO-A1-2018/185717
- DE-A1-102011 015 705

## Beschreibung

Die vorliegende Erfindung betrifft ein Verfahren zur Herstellung einer Mehrzahl von Verbundstrukturen durch jeweils unter plastischer Radialverformung mindestens eines der beteiligten Bauteile in einer Radialpresse erfolgendes Fügen jeweils mindestens zweier Bauteile.

Es ist bekannt, durch in einer Radialpresse erfolgende plastische Radialverformung mindestens eines Bauteiles dieses mit einem weiteren Bauteil zu einer Verbundstruktur zu fügen. Ein sehr verbreitetes Beispiel hierzu ist die Herstellung von einbaufertigen Schlauchleitungen für Hydraulikanwendungen. Hierzu ist üblich, beidseits endseitig an einem Schlauchstück Anschlussarmaturen mittels Radialumformung fest anzubringen. Die Anschlussarmaturen umfassen dabei - als zwei getrennte Bauteile oder aber bereits zu einer sog. "einteiligen Armatur" miteinander verbunden - einen Nippel und eine Hülse, wobei der Nippel innen in den Endabschnitt des Schlauchstücks eingesteckt wird und die Hülse diesen außen umgibt, so dass sich der Endabschnitt des Schlauchstücks in einem Ringraum zwischen dem Nippel und der Hülse befindet. In der Radialpresse wird die Hülse plastisch radial nach innen verformt, so dass der Endabschnitt des Schlauchstücks zwischen ihr und dem Nippel fest eingequetscht wird. Relevanten Stand der Technik bildet insoweit beispielsweise die DE 36 11 253 C2; und auch die DE 10 2011 015 705 A1 offenbart eine Radialpresse, welche für einen derartigen Fügeprozess geeignet ist und über eine den Pressvorgang steuernde Maschinensteuerung verfügt. Weiterhin ist, was im Rahmen der eingangs angesprochenen Verfahren zur Herstellung von Verbundstrukturen einsetzbare Radialpressen angeht, beispielsweise zu verweisen auf DE 20 2016 100 660 U1, DE 20 2016 008 097 U1, DE 10 2016 106 650 A1, DE 10 2014 014 585 B3, DE 10 2014 012 485 B3, DE 10 2014 008 613 A1, DE 10 2011 015 770 A1, DE 10 2011 015 654 A1, DE 10 2009 057 726 A1, DE 10 2005 041 487 A1, DE 10 2005 034 260 B3, DE 601 21 915 T2, DE 298 24 688 U1, DE 199 44 141 C1, DE 199 40 744 B4, DE 101 49 924 A1, DE 41 35 465 A1 und DE 35 13 129 A1.

Bei den in Anwendung des hier einschlägigen Herstellungsverfahrens, d. h. unter plastischer Radialverformung mindestens eines der beteiligten Bauteile, gefügten Verbundstrukturen (z. B. Hydraulik-Schlauchleitungen) besteht die Besonderheit, dass nach dem Fügeprozess typischerweise mindestens eines der Bauteile innerhalb eines anderen Bauteils angeordnet ist (z. B. der Nippel innerhalb des Schlauches, und der Schlauch wiederum innerhalb der Hülse). Damit ist eine optische bzw. Sichtkontrolle der jeweils hergestellten Verbindung typischerweise unmöglich. Das bedeutet, dass bedingt durch Besonderheiten des spezifischen Herstellungsverfahrens mögliche Fehler der fertig gefügten Verbundstruktur an dieser selbst oft nur mit vergleichsweise aufwändigen Prüfverfahren (z. B. einzelne Druckprüfung jeder einzelnen Hydraulikleitung) feststellbar ist. Zudem kommen in Umsetzung des hier in Rede stehenden Verfahrens der plastischen Radialverformung hergestellte Verbundstrukturen (z. B. Hochdruck-Schlauchleitungen) häufig in hochgradig, z. T. sogar extrem sicherheitskritischen Anwendungen zum Einsatz. Unterbleibt eine aufwändige Kontrolle im obigen Sinne, kann, je nach der individuellen Anwendung, von in eingangs dargelegter Weise durch plastische Radialverpressung mindestens eines der beteiligten Bauteile hergestellten Verbundstrukturen durchaus eine erhebliche Gefährdung ausgehen.

Die EP 2 927 854 A1 offenbart ein industrietaugliches mobiles elektronisches Gerät, wie z. B. ein persönliches Mobiltelefon oder ein Tablet-Computer, welches dem Benutzer die drahtlose Interaktion mit industriellen Geräten für eine Vielzahl von Zwecken ermöglicht. Das mobile elektronische Gerät kann mit einem Industriegerät kommunizieren, um Konfigurationseinstellungen zu lesen und zu schreiben, Protokolldaten zu lesen und anzuzeigen, Befehle an das Industriegerät zu senden, und andere solche Funktionen. Das mobile elektronische Gerät kann verschiedene Arten der Analyse von Bildern und Videos des Industriegeräts durchführen, einschließlich der Identifizierung und Übersetzung von auf dem Gerät aufgedruckten Modell- oder Gerätenummern oder die Übersetzung von Fehlercodes, die von dem Industriegerät angezeigt werden. Das mobile elektronische Gerät kann auch zusätzliche Informationen über das Industriegerät oder die gespeicherten Daten des Geräts durch Interaktion mit einem technischen Fernsupportdienst abrufen und kann verwendet werden, um den Dialog mit einer Person des technischen Fernsupports zu erleichtern.

Aus der EP 3 012 695 A1 ist ein System zur Überwachung und Steuerung einer Industrieanlage mit einer Vielzahl von Bearbeitungsstationen, die in mehrere Kontrollbereiche gruppiert sind, bekannt. Das System umfasst eine Vielzahl von jeweils einem Bereich zugeordneten programmierbaren Steuerungen zur Überwachung und/oder Steuerung der Stationen, die zum Kontrollbereich gehören. Ein Kommunikationsnetzwerk verbindet die programmierbaren Steuerungen miteinander. Ferner ist mindestens eine Mensch-Maschine-Schnittstelleneinheit mit einem tragbaren Computer mit einem drahtlosen Transceiver vorgesehen. Das System umfasst Mittel zur Ermöglichung des Zugriffs des tragbaren Computers auf das Kommunikationsnetz über den drahtlosen Transceiver, so dass der tragbare Computer Überwachungs- und/oder Steuerbefehle an die die programmierbaren Steuerungen senden kann. Das System umfasst ferner eine Vielzahl von Identifikationsvorrichtungen, wobei jedem Kontrollbereich eine jeweilige Identifikationseinrichtung zugeordnet ist zum Erkennen des Vorhandenseins des tragbaren Computers in einem bestimmten Kontrollbereich.

Die WO 2018/185717 A1 offenbart eine Anlage zur Herstellung von Produkten, insbesondere eine Anlage zum Auftragen einer Beschichtung auf Teile, die eine Vielzahl von Vorrichtungen umfasst. Die Anlage weist mindestens eine Funkübertragungsvorrichtung auf, die mit einer vorgegebenen Periodizität ein Funksignal sendet, das mindestens eine eindeutige Kennung enthält, die es ermöglicht, jedes Gerät zu identifizieren. Ferner ist mindestens eine tragbare Vorrichtung vorgesehen, die von einem Bediener getragen wird und die Signale empfängt, die von der Funkübertragungsvorrichtung gesendet werden. Von der tragbaren Vorrichtung wird mindestens ein auf diese geladenes spezifisches Programm ausgeführt, um einen eindeutigen Identifikator des Geräts zu extrahieren und die Entfernung zwischen Bediener und Gerät durch die Analyse des Trends des Funksignals zu ermitteln. Die funkübertragende Vorrichtung ist ein elektronisches Modul, das nach dem Bluetooth-Standard arbeitet, eine aktive Übertragungsfunktion ausführt, die als "Beacon Marketing" bekannt ist, nach der es periodisch seinen eindeutigen Identifikator und optional auch einen Teil der von den Sensoren, mit denen es ausgestattet ist, aufgezeichneten Messungen überträgt, und mindestens einen Fernkonfigurations-/Einstellungskanal durch Funkfrequenzkommunikation mit einer externen Steuervorrichtung hat, mit der es Datenpakete austauscht. Zwischen der genannten tragbaren Vorrichtung und der Funkfrequenz-Sendevorrichtung in Empfangskonfiguration wird eine Verbindungsprozedur ausgeführt, um Informationen über den Betriebszustand der genannten Geräte zu erhalten. Die Signale werden an einen entfernten Server, vorzugsweise eine Cloud, übertragen, um die Arbeitsbedingungen der Geräte, aus denen die Anlage besteht, zu überwachen.

Im Lichte der Problematik, wie sie weiter oben im Zusammenhang mit den hier in Rede stehenden Verfahren zur Herstellung einer Mehrzahl von Verbundstrukturen durch jeweils unter plastischer Radialverformung mindestens eines der beteiligten Bauteile in einer Radialpresse erfolgendes Fügen jeweils mindestens zweier Bauteile aufgezeigt wurde, ist die vorliegende Erfindung darauf gerichtet, einen Beitrag zu einer Verbesserung der Sicherheit bei der Umsetzung des eingangs genannten Verfahrens in der betrieblichen Praxis zu leisten.

Gelöst wird diese Aufgabenstellung gemäß der vorliegenden Erfindung durch das in Anspruch 1 angegebene Verfahren. Demnach zeichnet sich das seiner Art nach eingangs dargelegte Verfahren erfindungsgemäß dadurch aus, dass es unter Verwendung eines Systems abläuft, welches mehrere an unterschiedlichen Standorten installierte Radialpressen, mehrere an den unterschiedlichen Standorten befindliche mobile Endgeräte und einen an einem wiederum anderen Standort installierten zentralen Server umfasst, wobei
- die Radialpressen jeweils über eine mit einer SPS-Maschinensteuerung und einem "Bluetooth Low Energy"/BTLE-Kommunikationsmodul ausgestattete Steuereinheit verfügen,
- jeder Radialpresse ein zur Kommunikation mit dem BTLE-Kommunikationsmodul der betreffenden Radialpresse geeignetes mobiles Endgerät zugeordnet ist,
- die mobilen Endgeräte zur Kommunikation mit dem an einem wiederum anderen Standort installierten, mit einem Pressprogrammspeicher ausgestatteten zentralen Server über ein mobiles Datennetz eingerichtet sind,
   wobei
- auf den mobilen Endgeräten dem Einrichten der jeweils zugeordneten Radialpresse dienende Konfigurationsprogramme abgespeichert sind,
   - die jeweilige Radialpresse über das zugeordnete mobile Endgerät für ein eine Vielzahl von gleichartigen Radialverformungsvorgängen umfassendes Los eingerichtet wird, und zwar durch Konfiguration der SPS-Maschinensteuerung mittels eines spezifischen Pressprogramms unter Berücksichtigung von durch das mobile Endgerät vom zentralen Server losbezogen abgerufenen programmspezifischen Daten, und
- der jeweilige individuelle Radialverformungsvorgang innerhalb des betreffenden Loses durch an der Radialpresse selbst angeordnete Auslösemittel ausgelöst wird.

Die erfindungsgemäße, durch verschiedene miteinander synergetisch-kombinatorisch zusammenwirkende Gesichtspunkte charakterisierte Verfahrensführung ermöglicht - im Vergleich mit dem derzeit realisierten Stand der Technik - eine Mehrzahl von Vorteilen von teilweise ganz erheblicher sicherheitsrelevanter Tragweite. Besonders hervorzuheben ist die - vor der Durchführung eines eine Mehrzahl von gleichartigen Radialverformungsvorgängen umfassenden Loses erfolgende - Einrichtung der jeweiligen Radialpresse über ein mobiles Endgerät, welches einerseits - über den BTLE-Standard (Bluetooth Low Energy) - mit der Steuereinheit der betreffenden Radialpresse und andererseits - über ein mobiles Datennetz - mit einem einen Programmspeicher aufweisenden zentralen Server kommuniziert. So können bei der Einrichtung der betreffenden Radialpresse im Hinblick auf den konkret abzuwickelnden, insbesondere durch die jeweilige individuelle Paarung der zu fügenden Bauteile (z. B. spezielles Schlauchstück und spezielle Anschlussarmatur) definierten Pressauftrag aktuellste, von dem zentralen Server abgerufene pressprozessbezogene Daten und Informationen berücksichtigt werden. Das betrifft nicht nur auf den durchzuführenden Pressvorgang bezogene Pressparameter im engeren Sinne wie Presskraft/Pressdruck, Pressmaß, Pressgeschwindigkeit, etc. Vielmehr können durch den zentralen Server insbesondere auch auf neusten/aktuellen empirischen Erkenntnissen, welche an einer anderen dem System angeschlossenen Radialpresse oder auf sonstige Weise gewonnen wurden, basierende Warnhinweise bereitgestellt werden, beispielsweise betreffend eine mögliche Langzeit-Inkompatibilität bestimmter miteinander fügbarer Bauteile in dem Sinne, dass sich die betreffende Paarung in Versuchen bzw. in betrieblicher Praxis als nicht hinreichend zuverlässig bzw. beherrschbar erwiesen hat.

Die sicherheitstechnisch optimale Einrichtung der jeweiligen Radialpresse ist dabei, in Umsetzung der vorliegenden Erfindung, nicht mit dem Nachteil einer Sabotagemöglichkeit bzw. möglichen Korrumpierbarkeit der betreffenden Radialpresse oder Kontaminierbarkeit mit Schadsoftware behaftet. Denn die systemgebundenen Radialpressen brauchen selbst weder direkt mit dem Internet, noch mit einem betrieblichen W-LAN verbunden bzw. verbindbar zu sein. Da die Radialpressen für deren Einrichtung in diesem Sinne nicht direkt über das Internet oder ein betriebliches W-LAN ansteuerbar sind, sondern allein über das jeweils zugeordnete, mit der Radialpresse über BTLE kommunizierende mobile Endgerät, ist ein sonst mögliches "Einfallstor" für eine - absichtlich oder unabsichtlich - fehlerbehaftete Einrichtung versperrt.

Durch die über das jeweils zugeordnete mobile Endgerät erfolgende, gewissermaßen akute losbezogene Einrichtung der in das System integrierten Radialpressen unter Berücksichtigung von vom zentralen Server abgerufenen Daten lässt sich zudem vermeiden, dass in den Steuereinheiten der Radialpressen - auf einer entsprechenden Speichereinheit - verschiedene Pressprogramme abgespeichert sind, aus denen der Bediener eines auswählt. Dies trägt dazu bei, dass die Gefahr einer Fehlbedienung reduziert ist, was einen zusätzlichen durch die vorliegende Erfindung ermöglichten sicherheitsrelevanten Aspekt darstellt. Hinzu kommt der wirtschaftliche Vorteil, dass die jeweilige Radialpresse entsprechend einfacher aufgebaut sein kann. Denn nicht nur können die bei den Radialpressen vorgesehenen Steuereinheiten im engeren Sinne "abgespeckt" werden, sondern auch zugeordnete Eingabe- und Ausgabeeinheiten. Im Rahmen der Erfindung kommen die Radialpressen typischerweise mit einem Minimal-Display aus. Insbesondere ist ein Touchdisplay verzichtbar.

Anders als das Einrichten der jeweiligen Radialpresse erfolgt im Rahmen der vorliegenden Erfindung das Auslösen des jeweiligen einzelnen Radialverformungsvorgangs allerdings nicht über das jeweils zugeordnete mobile Endgerät. Es erfolgt vielmehr - insbesondere im Interesse einer hohen anwenderseitigen Sicherheit - über an der Radialpresse selbst angeordnete Auslösemittel. Dies können insbesondere durch eine Bedienperson manuell betätigbare Betätigungsmittel (wie beispielsweise Handschalter, Fußpedal, oder dergleichen) sein. Namentlich dann, wenn die betreffende Radialpresse Teil einer automatisierten Montagezelle ist, kommen aber ebenso maschineninterne Auslösemittel in Betracht. Hierunter fällt insbesondere ein Auslösen des jeweiligen einzelnen Radialverformungsvorgangs auf der betreffenden Radialpresse durch deren Maschinensteuerung in Abhängigkeit von spezifischen maschinenbezogenen Eingangssignalen, wie sie beispielsweise durch die korrekte automatische Bestückung der betreffenden Radialpresse mit den zu fügenden Bauteilen überwachende und/oder sicherheitsrelevante Sensoren bereit gestellt werden können.

Gemäß einer bevorzugten Weiterbildung der Erfindung ist auf den von dem System umfassten mobilen Endgeräten jeweils ein zur Einrichtung weiterer, anderer Radialpressen geeignetes Konfigurationsprogramm gespeichert. So kommen die dargelegten, mit der Erfindung erzielbaren Vorteile in besonders ausgeprägtem Maße zum Tragen, weil mit einem mobilen Endgerät mehrere (in dem betreffenden Betrieb installierte) Radialpressen einrichtbar sind. Durch die hierdurch mögliche Beschränkung der Anzahl der in dem betreffenden Betrieb für die Einrichtung der Radialpressen vorgehaltenen mobilen Endgeräte wird das Risiko einer unerlaubten Einflussnahme auf die Radialpressen minimiert. In diesem Zusammenhang ist ganz besonders vorteilhaft, wenn das System Radialpressen unterschiedlicher Art umfasst, wobei die Konfigurationsprogramme sämtlicher mobiler Endgeräte identisch sind. Die Möglichkeit der Einrichtung verschiedener Radialpressen über ein einziges mobiles Endgerät unter Anwendung eines einzigen Konfigurationsprogramms kann ebenfalls einen Beitrag zur Reduzierung der Gefahr einer Fehlbedienung leisten.

Besonders bevorzugt verfügen die systemeigenen mobilen Endgeräte jeweils über einen Bauteil-Datenspeicher, der über das zugeordnete Konfigurationsprogramm ansteuerbar ist. In diesem sind die Daten zu Bauteilen, welche mit den in das System integrierten Radialpressen zu verarbeiten sind, hinterlegt. Ebenfalls können für bestimmte Bauteilpaarungen die jeweilige Verpressung charakterisierende Daten bzw. Verfahrensparameter (z. B. Presskraft/Pressdruck, Pressmaß, Pressgeschwindigkeit, etc.) hinterlegt sein, welche ggf. über die Datenabfrage vom zentralen Server verifiziert bzw. modifiziert werden.

Eine dezentrale Speicherung von Bauteildaten auf einem Bauteil-Datenspeicher des jeweiligen mobilen Endgeräts ist dabei allerdings keineswegs unabdingbar. Im Gegenteil: Bei einer besonders bevorzugten Ausgestaltung der Erfindung sind auch die Bauteildaten auf einer Speichereinheit des zentralen Servers hinterlegt. Dies gilt namentlich dann, wenn die innerhalb des erfindungsgemäßen Verfahrens zu verarbeitenden Bauteile jeweils eine sie eindeutig identifizierende, auslesbare Codierung (z. B. Barcode oder Transponder) aufweisen und die mobilen Endgeräte über jeweils einen Aufnehmer bzw. eine Einlese-Schnittstelle (z. B. Kamera oder RFID-Antenne) verfügen, über welche die Bauteilcodierungen einlesbar sind. Die Bauteilcodierungen der zu fügenden Bauteilpaarung werden dann von dem betreffenden mobilen Endgerät an den zentralen Server übertragen, so dass die von diesem durch das mobile Endgerät abgerufenen, bei der Einrichtung der betreffenden Radialpresse berücksichtigten pressprogrammspezifischen Daten sich zuverlässig exakt auf die fragliche Bauteilpaarung beziehen. Dieser Ausgestaltung ist, weil Fehleingaben ausgeschlossen sind, ein besonders hoher Sicherheitsstandard immanent.

Gemäß einer abermals anderen bevorzugten Weiterbildung der Erfindung übermittelt das mobile Endgerät bei dem der Konfiguration der betreffenden Radialpresse zugeordneten Datenabruf vom zentralen Server an diesen die eigenen Positionsdaten. Diese können durch den zentralen Server zu Verifikationszwecken verarbeitet werden. Bei einer insoweit besonders bevorzugten Ausgestaltung besteht die Verifikation in einem Abgleich der übermittelten Position des mobilen Endgeräts mit Positionsdaten, die in einem Pressenspeicher des zentralen Servers für die an das System angeschlossenen Radialpressen hinterlegt sind. Ergibt der Abgleich, dass die Positionsdaten des mobilen Endgeräts abweichen von den Positionsdaten, die in dem Pressenspeicher für die von dem mobilen Endgerät einzurichtende Radialpresse hinterlegt sind, so kann dies als Indiz für eine Unregelmäßigkeit (z. B. einen Maschinendiebstahl) angesehen und entsprechend verarbeitet werden, beispielsweise indem die Einrichtung der Radialpresse verweigert wird.

Eine wiederum andere bevorzugte Weiterbildung der Erfindung zeichnet sich dadurch aus, dass der zentrale Server mit einem Produktionsspeicher ausgestattet ist, wobei Daten der auf der jeweiligen Radialpresse innerhalb des betreffenden Loses abgewickelten Radialverformungsvorgänge über die BTLE-Kommunikationsverbindung von der Maschinensteuerung zum mobilen Endgerät und von diesem über das mobile Datennetz zum zentralen Server übertragen werden. Der zentrale Server dokumentiert auf diese Weise automatisch sämtliche auf den dem System zugehörigen Radialpressen durchgeführten Verpressungen. Dies ist für die Sicherung von Qualitätsstandards unter bestehenden Zertifizierungen ein eminent bedeutender Vorteil. Die entsprechende Dokumentation der Maschinennutzung auf dem zentralen Server kann weiterhin für die Überwachung der Einhaltung von Service- bzw. Wartungsintervallen verwendet werden. Namentlich kann - jedenfalls für ausgewählte, unter erhöhten Sicherheitsstandards arbeitende Radialpressen - eine Einrichtung der betreffenden Maschine verweigert werden, bis vorgeschriebene Service- bzw. Wartungsarbeiten durchgeführt wurden bzw. deren Durchführung bestätigt wurde. Wiederum ergibt sich ein ganz erheblicher sicherheitstechnischer Gewinn.

Insbesondere im Zusammenhang mit der vorstehenden Weiterbildung der Erfindung ist sehr vorteilhaft, wenn der zentrale Server über einen Service-Datenspeicher mit durch die mobilen Endgeräte abrufbar abgespeicherten Service-Instruktionen verfügt. Für an der jeweiligen Maschine anstehende Service- bzw. Wartungsarbeiten können auf diese Weise dem Bediener auf dessen mobiles Endgerät ganz spezifische, individuelle Anweisungen übermittelt werden. Eine - beispielsweise anhand eines einer anderen Radialpresse zugehörigen Handbuches durchgeführte - versehentliche Fehl-Wartung lässt sich hierdurch ausschließen. Erneut ist der sicherheitstechnische Gewinn ganz erheblich.

Ebenfalls kann die weiter oben erläuterte Dokumentation der Maschinennutzung auf dem zentralen Server für die mögliche Ermittlung von nutzungsbezogenen, vom Umfang der Nutzung der jeweiligen Radialpresse abhängigen Nutzungsentgelten verwendet werden. Besonders bevorzugt kann dabei ein derartiges nutzungsbezogenes Nutzungsentgelt durch den zentralen Server bereits im Voraus, in Reaktion auf den - auf eine bestimmte Losgröße gerichteten - Datenabruf vom zentralen Server durch das mobile Endgerät ermittelt und an das mobile Endgerät kommuniziert werden, wobei die Übermittlung der Radialpressen-Konfigurationsdaten vom zentralen Server an das mobile Endgerät in diesem Falle von der Bestätigung der prognostizierten anfallenden Kosten auf dem mobilen Endgerät abhängig gemacht werden kann.

Aus vorstehenden Erläuterungen ist ersichtlich, dass für die Umsetzung der vorliegenden Erfindung auch strukturelle Merkmale eine Rolle spielen, durch die sich das für die Durchführung des erfindungsgemäßen Verfahrens genutzte System auszeichnet. Insoweit wird - auf dem Wege des Anspruchs 13 - Schutz auch für eben ein solches System beansprucht. Bevorzugte Weiterbildungen des Systems ergeben sich unmittelbar aus den vorstehenden Erläuterungen des erfindungsgemäßen Verfahrens.

Im Folgenden wird eine bevorzugte Weiterbildung der vorliegenden Erfindung anhand eines in der Zeichnung veranschaulichten bevorzugten Ausführungsbeispiels näher erläutert. Dabei zeigt
- Fig. 1: in schematischer Darstellung ein zur Durchführung des erfindungsgemäßen Verfahrens hergerichtetes System, und
- Fig. 2: veranschaulicht Detailaspekte des Systems nach Fig. 1.

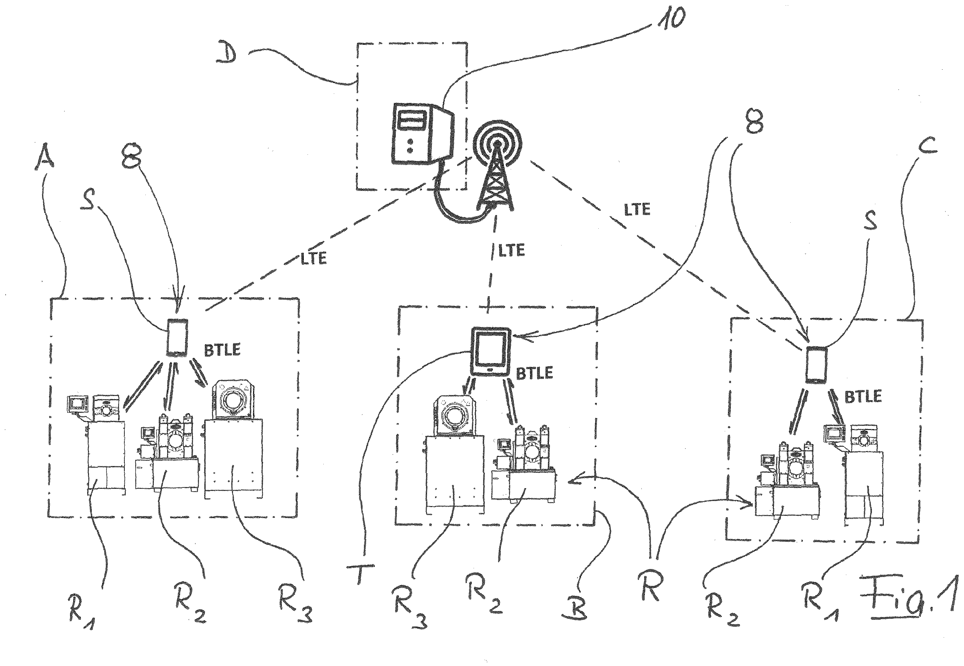

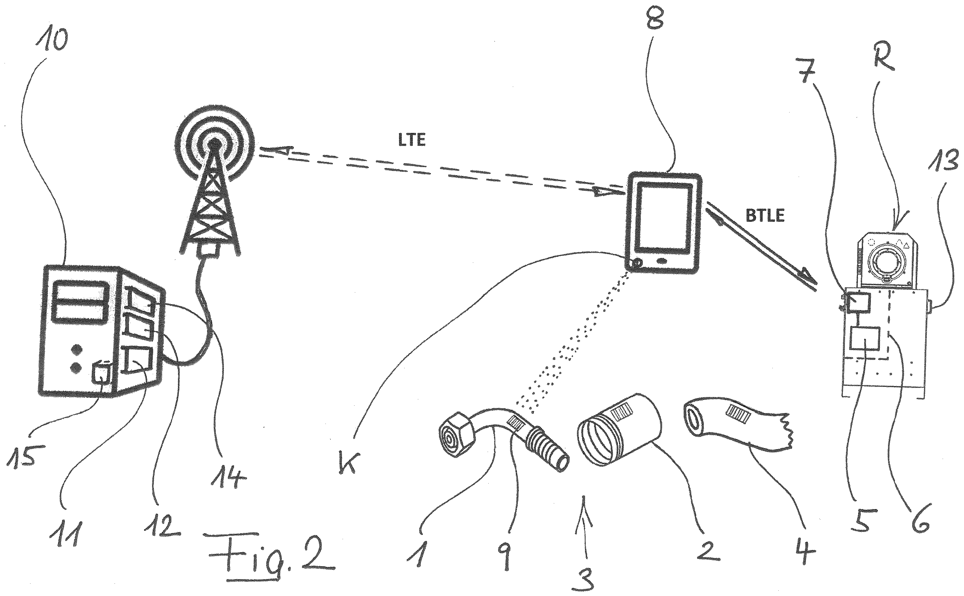

Nach Fig. 1 umfasst das System diverse an unterschiedlichen Standorten A, B, C installierte Radialpressen R, nämlich an einem ersten Standort A eine Radialpresse vom Typ R₁, eine Radialpresse vom Typ R₂ und eine Radialpresse vom Typ R₃, an einem zweiten Standort B eine Radialpresse vom Typ R₂ und eine Radialpresse vom Typ R₃ und an einem dritten Standort C eine Radialpresse vom Typ R₁ und eine Radialpresse vom Typ R₂. Die drei Standorte A, B und C sind hier als drei verschiedene, räumlich getrennte Betriebsstätten zu verstehen. Jeweils sind die Radialpressen R₁, R₂ und R₃ geeignet und hergerichtet für die Herstellung von Hydraulikleitungen durch Anbringen zweier - jeweils einen Nippel 1 und eine Hülse 2 aufweisenden - Anschlussarmaturen 3 an den Enden eines Schlauchstücks 4 (vgl. Fig. 2).

Jede der Radialpressen R weist, in als solches bekannter Weise, eine mit einer SPS-Maschinensteuerung 5 ausgestatte Steuereinheit 6 auf (vgl. Fig. 2). Diese ist weiterhin jeweils mit einem BTLE-Kommunikationsmodul 7 ausgestattet, welches eine über den Standard "Bluetooth Low Energy" (BTLE) erfolgende Kommunikation mit einem mobilen Endgerät 8, d. h. insbesondere einem Smartphone S bzw. einem Tablet T erlaubt. An jedem der drei Standorte A, B und C existiert mindestens ein derartiges mobiles Endgerät 8. Auf diesem ist jeweils ein zur Einrichtung sämtlicher an dem betreffenden Standort A, B bzw. C installierten Radialpressen R geeignetes Konfigurationsprogramm gespeichert.

Die mobilen Endgeräte 8 verfügen dabei jeweils über eine Kamera K. Mittels dieser lassen sich an dem Nippel 1, an der Hülse 2 und an dem Schlauchstück 4 vorhandene, optisch auslesbare Codierungen 9, welche das betreffende Bauteil eindeutig identifizieren, in das mobile Endgerät 8 einlesen.

Um die jeweilige Radialpresse R - durch entsprechende Programmierung der SPS-Maschinensteuerung 5 - automatisch einzurichten, greift das betreffende zugeordnete mobile Endgerät 8 auf einen an einem wiederum anderen Standort D vorgehaltenen zentralen Server 10 zurück. Die Kommunikation zwischen dem jeweiligen mobilen Endgerät 8 und dem zentralen Server 10 erfolgt dabei über ein mobiles Datennetz (Mobilfunk) gemäß einem etablierten Standard, beispielsweise LTE. Im Rahmen des auf ihm abgespeicherten Konfigurationsprogramms ruft das betreffende mobile Endgerät 8 dabei von dem zentralen Server 10, nämlich aus dessen Programmspeicher 11, ein individuelles, auftragsspezifisches Pressprogramm ab und installiert dieses - unter Verwendung der BTLE-Kommunikation - auf der betreffenden Radialpresse R, d. h. programmiert deren SPS-Maschinensteuerung 5 gemäß den vom zentralen Server 10 übermittelten Konfigurationsdaten. Der von dem mobilen Endgerät 8 an den zentralen Server 10 gerichtete Programmabruf spezifiziert dabei die konkrete individuelle Pressaufgabe, für die das geeignete Pressprogramm auf der betreffenden Radialpresse R zu installieren ist, anhand einerseits der die jeweilige, aktuell mit dem mobilen Endgerät 8 kommunizierende Radialpresse R individualisierenden Maschinendaten und andererseits der über die Kamera K eingelesenen, den Nippel 1, die Hülse 2 und den Schlauch 4 individualisierenden Bauteilcodierungen 9. Zu Kontrollzwecken übermittelt das mobile Endgerät 8 im Rahmen des jeweiligen Programmabrufs auch seine Standortdaten an den zentralen Server 10.

Der zentrale Server 10 verfügt über einen Bauteilspeicher 12 mit Daten zu den über ihre jeweilige Codierung 9 identifizierbaren Bauteilen. Im zentralen Server 10 erfolgt eine auf den spezifischen Programmabruf (s. o.) abgestimmte Plausibilitätsprüfung insbesondere hinsichtlich der Kompatibilität der jeweils miteinander kombinierten Bauteile Schlauch 4, Nippel 1 und Hülse 2. Bei einem positiven Prüfergebnis wird, wie vorstehend dargelegt, über Mobilfunk an das mobile Endgerät 8 das von diesem per BTLE auf der spezifischen Radialpresse R zu installierende Pressprogramm übermittelt. Ist das Ergebnis der Plausibilitätsprüfung indessen negativ, versendet der zentrale Server 10 auf das betreffende mobile Endgerät 8 eine entsprechende Information bzw. Warnung.

Das Auslösen des jeweiligen individuellen Radialverformungsvorgangs, um durch plastische Verformung der Hülse 2 gemäß dem installierten Pressprogramm die jeweils drei Bauteile fest und unlösbar miteinander zu einem Verbund (hier einer Hydraulikleitung) zu fügen, erfolgt dann - innerhalb des betreffenden Loses - jeweils durch an der Radialpresse (R) selbst angeordnete Auslösemittel 13. Diese sind bei diesem Ausführungsbeispiel als durch den Bediener der Radialpresse R manuell zu betätigende Betätigungsmittel in Form eines Tasters ausgeführt.

Der zentrale Server 10 verfügt ferner über einen Produktionsspeicher 14. Auf diesem werden die Daten sämtlicher auf der jeweiligen Radialpresse R abgewickelten Radialverformungsvorgänge abgespeichert. Diese Produktionsdaten werden hierzu über die BTLE-Kommunikationsverbindung von der Maschinensteuerung 5 zum mobilen Endgerät 8 und von diesem über das mobile Datennetz zum zentralen Server 10 übertragen. Teil der an den zentralen Server 10 übermittelten und dort in dem Produktionsspeicher 14 hinterlegten Produktionsdaten können dabei insbesondere auch über gesonderte Aufnehmer an dem jeweiligen Werkstück erfasste Mess- oder Testdaten sein.

Weiterhin verfügt der zentrale Server 10 über einen Service-Datenspeicher 15, in dem für alle dem System zugehörigen, individuell registrierten Radialpressen R Service-Instruktionen abgespeichert sind. Diese sind durch das jeweils zugeordnete mobile Endgerät 8 abrufbar bzw. werden - unter Berücksichtigung von für die einzelnen Radialpressen R hinterlegten Serviceplänen - aktiv auf das jeweils zugeordnete mobile Endgerät 8 übermittelt.

## Patentansprüche

1. Verfahren zur Herstellung einer Mehrzahl von Verbundstrukturen durch jeweils unter plastischer Radialverformung mindestens eines der beteiligten Bauteile in einer Radialpresse (R) erfolgendes Fügen jeweils mindestens zweier Bauteile, wobei das Verfahren unter Verwendung eines Systems abläuft, welches mehrere an unterschiedlichen Standorten (A, B, C) installierte Radialpressen (R), mehrere an den unterschiedlichen Standorten (A, B, C) befindliche mobile Endgeräte (8) und einen an einem wiederum anderen Standort (D) installierten zentralen Server (10) umfasst, wobei
- die Radialpressen (R) jeweils über eine mit einer SPS-Maschinensteuerung (5) und einem "Bluetooth Low Energy"/BTLE-Kommunikationsmodul (7) ausgestattete Steuereinheit (6) verfügen,
- jeder Radialpresse (R) ein zur Kommunikation mit dem BTLE-Kommunikationsmodul (7) der betreffenden Radialpresse (R) geeignetes mobiles Endgerät (8) zugeordnet ist,
- die mobilen Endgeräte (8) zur Kommunikation mit dem an einem wiederum anderen Standort (D) installierten, mit einem Pressprogrammspeicher (11) ausgestatteten zentralen Server (10) über ein mobiles Datennetz eingerichtet sind,
wobei
- auf den mobilen Endgeräten (8) dem Einrichten der jeweils zugeordneten Radialpresse (R) dienende Konfigurationsprogramme abgespeichert sind,
- die jeweilige Radialpresse (R) über das zugeordnete mobile Endgerät (8) für ein eine Vielzahl von gleichartigen Radialverformungsvorgängen umfassendes Los eingerichtet wird, und zwar durch Konfiguration der SPS-Maschinensteuerung (5) mittels eines spezifischen Pressprogramms unter Berücksichtigung von durch das mobile Endgerät (8) vom zentralen Server (10) losbezogen abgerufenen programmspezifischen Daten, und
- der jeweilige individuelle Radialverformungsvorgang innerhalb des betreffenden Loses durch an der Radialpresse (R) selbst angeordnete Auslösemittel (13) ausgelöst wird.

2. Verfahren nach Anspruch 1, **dadurch gekennzeichnet, dass** die Steuereinheiten (6) der Radialpressen (R) nicht über für die Abspeicherung einer Mehrzahl von Pressprogrammen geeignete Speichereinheiten verfügen.

3. Verfahren nach Anspruch 1 oder Anspruch 2, **dadurch gekennzeichnet, dass** auf den mobilen Endgeräten (8) jeweils ein zur Einrichtung weiterer, anderer Radialpressen (R) geeignetes Konfigurationsprogramm gespeichert ist.

4. Verfahren nach einem der Ansprüche 1 bis 3, **dadurch gekennzeichnet, dass** das System Radialpressen (R) unterschiedlicher Art (R₁, R₂, R₃) umfasst, wobei die Konfigurationsprogramme sämtlicher mobiler Endgeräte (8) identisch sind.

5. Verfahren nach einem der Ansprüche 1 bis 4, **dadurch gekennzeichnet, dass** die mobilen Endgeräte (8) jeweils über einen Bauteil-Datenspeicher verfügen, auf welchen das jeweilige Konfigurationsprogramm Zugriff hat.

6. Verfahren nach einem der Ansprüche 1 bis 4, **dadurch gekennzeichnet, dass** die Bauteile jeweils eine sie eindeutig identifizierende, berührungslos auslesbare Codierung aufweisen und die mobilen Endgeräte (8) über jeweils einen Aufnehmer verfügen, über welche die Bauteilcodierungen (9) einlesbar sind, wobei die Bauteilcodierungen (9) der jeweils zu fügenden Bauteilpaarung von dem betreffenden mobilen Endgerät (8) an den zentralen Server (10) übertragen werden.

7. Verfahren nach Anspruch 6, **dadurch gekennzeichnet, dass** es sich bei den berührungslos auslesbaren Codierungen der Bauteile jeweils um eine optisch auslesbare Codierung (9) und bei den Aufnehmern der mobilen Endgeräte jeweils um eine Kamera (K) handelt.

8. Verfahren nach einem der Ansprüche 1 bis 7, **dadurch gekennzeichnet, dass** der zentrale Server (10) mit einem Produktionsspeicher (14) ausgestattet ist, wobei Daten der auf der jeweiligen Radialpresse (R) innerhalb des betreffenden Loses abgewickelten Radialverformungsvorgänge über die BTLE-Kommunikationsverbindung von der Maschinensteuerung (5) zum mobilen Endgerät (8) und von diesem über das mobile Datennetz zum zentralen Server (10) übertragen werden.

9. Verfahren nach Anspruch 8, **dadurch gekennzeichnet, dass** die in dem Produktionsspeicher (14) hinterlegten Daten zur automatischen Berechnung eines nutzungsbezogenen Nutzungsentgelts verwendet werden.

10. Verfahren nach einem der Ansprüche 1 bis 9, **dadurch gekennzeichnet, dass** durch den zentralen Server in Reaktion auf den Datenabruf durch das mobile Endgerät ein anfallendes nutzungsbezogenes Nutzungsentgelt ermittelt und an das mobile Endgerät kommuniziert wird, wobei die Übermittlung der Radialpressen-Konfigurationsdaten vom zentralen Server an das mobile Endgerät von der Bestätigung der anfallenden Kosten auf dem mobilen Endgerät abhängig gemacht wird.

11. Verfahren nach einem der Ansprüche 1 bis 10, **dadurch gekennzeichnet, dass** das mobile Endgerät (8) bei dem der Konfiguration der betreffenden Radialpresse (R) zugeordneten Datenabruf vom zentralen Server (10) an diesen die eigenen Positionsdaten übermittelt.

12. Verfahren nach einem der Ansprüche 1 bis 11, **dadurch gekennzeichnet, dass** die Radialpressen (R) über kein Touch-Display verfügen.

13. Verfahren nach einem der Ansprüche 1 bis 12, **dadurch gekennzeichnet, dass** der zentrale Server (10) über einen Service-Datenspeicher (15) mit durch die mobilen Endgeräte (8) abrufbar abgespeicherten Service-Instruktionen verfügt.

14. System, umfassend mehrere an unterschiedlichen Standorten (A, B, C) installierte Radialpressen (R), mehrere an den unterschiedlichen Standorten (A, B, C) befindliche mobile Endgeräte (8) und einen an einem wiederum anderen Standort (D) installierten zentralen Server (10), für die Herstellung von Verbundstrukturen durch Fügen jeweils mindestens zweier Bauteile unter plastischer Radialverformung jeweils mindestens eines der beteiligten Bauteile in einer der Radialpressen (R), wobei
- die Radialpressen (R) jeweils über eine mit einer SPS-Maschinensteuerung (5) und einem "Bluetooth Low Energy"/BTLE-Kommunikationsmodul (7) ausgestattete Steuereinheit (6) verfügen,
- jeder Radialpresse (R) ein zur Kommunikation mit dem BTLE-Kommunikationsmodul (7) der betreffenden Radialpresse (R) geeignetes mobiles Endgerät (8) zugeordnet ist,
- die mobilen Endgeräte (8) zur Kommunikation mit dem an einem wiederum anderen Standort (D) installierten, mit einem Programmspeicher (11) ausgestatteten zentralen Server (10) über ein mobiles Datennetz eingerichtet sind,
- auf den mobilen Endgeräten (8) dem Einrichten der jeweils zugeordneten Radialpresse (R) dienende Konfigurationsprogramme abgespeichert sind,
- die jeweilige Radialpresse (R) über das zugeordnete mobile Endgerät (8) für ein eine Mehrzahl von gleichartigen Radialverformungsvorgängen umfassendes Los einrichtbar ist, und zwar durch Konfiguration der SPS-Maschinensteuerung (5) mittels eines spezifischen Pressprogramms unter Berücksichtigung von durch das mobile Endgerät (8) vom zentralen Server (10) losbezogen abgerufenen programmspezifischen Daten, und
- an den Radialpressen (r) für das Auslösen des jeweiligen individuellen Radialverformungsvorgangs innerhalb des betreffenden Loses geeignete Auslösemittel (13) angeordnet sind.

## Claims

1. A method for the manufacture of a plurality of composite structures by joining, carried out in a radial press (R), respectively at least two components, respectively with plastic radial deformation at least of one of the components involved, wherein the process takes place by use of a system comprising a plurality of radial presses (R) installed at different locations (A, B, C), a plurality of mobile terminal units (8) installed at the different locations (A, B, C), and a central server (10) installed at yet another location (D), wherein
- the radial presses (R) are respectively provided with a control unit (6) equipped with a PLC machine controller (5) and a "Bluetooth Low Energy"/BTLE communication module (7),
- a mobile terminal unit (8) suitable for communication with the BTLE communication module (7) of the radial press (R) in question is associated with each radial press (R),
- the mobile terminal units (8) are set up for communication via a mobile data network with a central server (10), which is installed at yet another location (D) and is equipped with a press program memory (11),
wherein
- configuration programs used for setup of the respectively associated radial press (R) are stored on the mobile terminal units (8),
- the respective radial press (R) is set up via the associated mobile terminal unit (8) for a lot comprising a plurality of similar radial deformation processes, and specifically by configuration of the PLC machine controller (5) by means of a specific press program that takes into consideration program-specific data called in relation to the lot by the mobile terminal unit (8) from the central server (10), and
- the respective individual radial deformation process within the lot in question is triggered by triggering means (13) disposed on the radial press (R) itself.

2. The method of claim 1, **characterized in that** the control units (6) of the radial presses (R) are not provided with memory units suitable for the storage of a plurality of press programs.

3. The method of claim 1 or claim 2, **characterized in that** respectively one configuration program suitable for setup of further different radial presses (R) is stored on the mobile terminal units (8).

4. The method of one of claims 1 to 3, **characterized in that** the system comprises radial presses (R) of different kinds (R₁, R₂, R₃), wherein the configuration programs of all mobile terminal units (8) are identical.

5. The method of one of claims 1 to 4, **characterized in that** the mobile terminal units (8) are respectively provided with a component data memory, to which the respective configuration program has access.

6. The method of one of claims 1 to 4, **characterized in that** the components respectively have a contactlessly readable coding that identifies them unambiguously and the mobile terminal units (8) are provided respectively with a transducer, via which the component codings (9) are readable, wherein the component codings (9) of the component pair to be respectively joined are transmitted from the mobile terminal unit (8) in question to the central server (10).

7. The method of claim 6, **characterized in that** the contactlessly readable codings of the components are respectively an optically readable coding (9) and the transducers of the mobile terminal units are respectively a camera (K).

8. The method of one of claims 1 to 7, **characterized in that** the central server (10) is equipped with a production memory (14), wherein data of the radial deformation processes taking place on the respective radial press (R) within the lot in question are transmitted via the BTLE communication link from the machine controller (5) to the mobile terminal unit (8) and from there via the mobile data network to the central server (10).

9. The method of claim 8, **characterized in that** the data resident in the production memory (14) are used for automatic calculation of a use-related usage fee.

10. The method of one of claims 1 to 9, **characterized in that** an incurred use-related usage fee is determined by the central server in response to the call for data by the mobile terminal unit and is communicated to the mobile terminal unit, wherein the delivery of the radial press configuration data from the central server to the mobile terminal unit is made dependent on confirmation, on the mobile terminal unit, of the incurred costs.

11. The method of one of claims 1 to 10, **characterized in that** the mobile terminal unit (8) delivers its own position data to the central server (10) at the same time as it is calling data from it that are associated with the configuration of the radial press (R) in question.

12. The method of one of claims 1 to 11, **characterized in that** the radial presses (R) are not provided with any touch display.

13. The method of one of claims 1 to 12, **characterized in that** the central server (10) is provided with a service data memory (15) containing stored service instructions that can be called by the mobile terminal units (8).

14. A system comprising a plurality of radial presses (R) installed at different locations (A, B, C), a plurality of mobile terminal units (8) installed at the different locations (A, B, C), and a central server (10) installed at yet another location (D), for the manufacture of composite structures by joining respectively at least two components, by means of plastic radial deformation respectively at least of one of the components involved in one of the radial presses (R), wherein
- the radial presses (R) are respectively provided with a control unit (6) equipped with a PLC machine controller (5) and a "Bluetooth Low Energy"/BTLE communication module (7),
- a mobile terminal unit (8) suitable for communication with the BTLE communication module (7) of the radial press (R) in question is associated with each radial press (R),
- the mobile terminal units (8) are set up for communication via a mobile data network with a central server (10), which is installed at yet another location (D) and is equipped with a program memory (11),
- configuration programs used for setup of the respectively associated radial press (R) are stored on the mobile terminal units (8),
- the respective radial press (R) can be set up via the associated mobile terminal unit (8) for a lot comprising a plurality of similar radial deformation processes, and specifically by configuration of the PLC machine controller (5) by means of a specific press program that takes into consideration program-specific data called in relation to the lot by the mobile terminal unit (8) from the central server (10), and
- triggering means (13) suitable for triggering the respective individual radial deformation process within the lot in question are disposed on the radial presses (R).

## Revendications

1. Procédé de fabrication d'une pluralité de structures composites par assemblage respectif d'au moins deux pièces effectué respectivement sous déformation radiale plastique de l'une au moins des pièces concernées dans une presse radiale (R), dans lequel le procédé est mis en œuvre à l'aide d'un système comportant plusieurs presses radiales (R) installées à différents endroits (A, B, C), plusieurs terminaux mobiles (8) situés aux différents endroits (A, B, C) et un serveur central (10) installé à un autre endroit (D), dans lequel
- les presses radiales (R) disposent respectivement d'une unité de commande (6) équipée d'une commande de machine API (5) et d'un module de communication « Bluetooth Low Energy » / BTLE (7),
- un terminal mobile (8) adapté à la communication avec le module de communication BTLE (7) de la presse radiale (R) concernée est associé à chaque presse radiale (R),
- les terminaux mobiles (8) sont configurés pour la communication avec le serveur central (10) installé à un autre endroit (D) et équipé d'une mémoire de programme de presse (11), par le biais d'un réseau de données mobile,
dans lequel
- des programmes de configuration servant à la configuration de la presse radiale (R) respectivement associée sont enregistrés sur les terminaux mobiles (8),
- la presse radiale (R) respective est configurée par le biais du terminal mobile (8) associé pour un lot comportant une pluralité d'opérations de déformation radiale similaires, notamment par configuration de la commande de machine API (5) au moyen d'un programme de presse spécifique en fonction de données spécifiques au programme accessibles pour chaque lot par le biais du terminal mobile (8) depuis le serveur central (10), et
- l'opération de déformation radiale individuelle respective dans le lot concerné est déclenchée par un moyen de déclenchement (13) disposé sur la presse radiale (R) elle-même.

2. Procédé selon la revendication 1, **caractérisé en ce que** les unités de commande (6) des presses radiales (R) ne disposent pas d'unités de mémoire adaptées à l'enregistrement d'une pluralité de programmes de presse.

3. Procédé selon la revendication 1 ou la revendication 2, **caractérisé en ce qu'**un programme de configuration respectivement adapté à la configuration d'autres presses radiales (R) supplémentaires est enregistré sur les terminaux mobiles (8).

4. Procédé selon l'une des revendications 1 à 3, **caractérisé en ce que** le système comporte des presses radiales (R) de différents types (R₁, R₂, R₃), dans lequel les programmes de configuration de tous les terminaux mobiles (8) sont identiques.

5. Procédé selon l'une des revendications 1 à 4, **caractérisé en ce que** les terminaux mobiles (8) disposent respectivement d'une mémoire de données de pièce, à laquelle le programme de configuration a accès.

6. Procédé selon l'une des revendications 1 à 4, **caractérisé en ce que** les pièces présentent respectivement un codage identifiant celles-ci de façon univoque, lisible sans contact, et les terminaux mobiles (8) disposent respectivement d'un capteur, par le biais duquel les codages de pièce (9) peuvent être lus, dans lequel les codages de pièce (9) de la paire de pièces à assembler respectivement sont transmis au serveur central (10) depuis le terminal mobile (8) concerné.

7. Procédé selon la revendication 6, **caractérisé en ce que** les codages de pièces lisibles sans contact consistent respectivement en un codage lisible de façon optique (9) et respectivement en une caméra (K) dans le cas des capteurs des terminaux mobiles.

8. Procédé selon l'une des revendications 1 à 7, **caractérisé en ce que** le serveur central (10) est équipé d'une mémoire de production (14), dans lequel des données des opérations de déformation radiale exécutées sur la presse radiale (R) respective dans le lot concerné sont transmises au terminal mobile (8) depuis la commande de machine (5) par le biais de la liaison de communication BTLE et à partir de celui-ci au serveur central (10) par le biais du réseau de données mobile.

9. Procédé selon la revendication 8, **caractérisé en ce que** les données stockées dans la mémoire de production (14) sont utilisées pour le calcul automatique de frais d'utilisation liés à l'utilisation.

10. Procédé selon l'une des revendications 1 à 9, **caractérisé en ce que** des frais d'utilisation à payer liés à l'utilisation sont déterminés par le serveur central en réponse à la consultation de données par le terminal mobile et communiqués au terminal mobile, dans lequel la transmission des données de configuration des presses radiales par le serveur central au terminal mobile est subordonnée à la confirmation des frais à payer sur le terminal mobile.

11. Procédé selon l'une des revendications 1 à 10, **caractérisé en ce que** lors de la consultation de données associée à la configuration de la presse radiale (R) concernée par le serveur central (10), le terminal mobile (8) transmet les données de position propres à celui-ci.

12. Procédé selon l'une des revendications 1 à 11, **caractérisé en ce que** les presses radiales (R) ne disposent d'aucun écran tactile.

13. Procédé selon l'une des revendications 1 à 12, **caractérisé en ce que** le serveur central (10) dispose d'une mémoire de données de maintenance (15) avec des instructions de maintenance enregistrées de façon à pouvoir être consultées par les terminaux mobiles (8).

14. Système comportant plusieurs presses radiales (R) installées à différents endroits (A, B, C), plusieurs terminaux mobiles (8) situés aux différents endroits (A, B, C) et un serveur central (10) installé à un autre endroit (D), pour la fabrication de structures composites par assemblage respectif d'au moins deux pièces effectué respectivement sous déformation radiale plastique de l'une au moins des pièces concernées dans l'une des presses radiales (R), dans lequel
- les presses radiales (R) disposent respectivement d'une unité de commande (6) équipée d'une commande de machine API (5) et d'un module de communication « Bluetooth Low Energy » / BTLE (7),
- un terminal mobile (8) adapté à la communication avec le module de communication BTLE (7) de la presse radiale (R) concernée est associé à chaque presse radiale (R),
- les terminaux mobiles (8) sont configurés pour la communication avec le serveur central (10) installé à un autre endroit (D) et équipé d'une mémoire de programme de presse (11), par le biais d'un réseau de données mobile,
- des programmes de configuration servant à la configuration de la presse radiale (R) respectivement associée sont enregistrés sur les terminaux mobiles (8),
- la presse radiale (R) respective peut être configurée par le biais du terminal mobile (8) associé pour un lot comportant une pluralité d'opérations de déformation radiale similaires, notamment par configuration de la commande de machine API (5) au moyen d'un programme de presse spécifique en fonction de données spécifiques au programme accessibles pour chaque lot par le biais du terminal mobile (8) depuis le serveur central (10), et
- des moyens de déclenchement (13) adaptés pour déclencher l'opération de déformation radiale individuelle respective dans le lot concerné sont disposés sur les presses radiales (r).
